# EUROPÄISCHE PATENTSCHRIFT

(11) **EP 0 524 564 B1**
(45) Veröffentlichungstag und Bekanntmachung des Hinweises auf die Patenterteilung: **07.01.1998**
(21) Anmeldenummer: 92112318.8
(22) Anmeldetag: 18.07.1992
(51) Int. Cl.: D21H 27/20, D06N 7/00, B32B 29/00, D21H 27/32

(54) **Dreidimensional geprägte Wand- oder Deckenbekleidung, insbesondere Prägetapete aus Papier**
Three-dimensional embossed coverings for walls or ceilings, especially embossed wall paper
Revêtements gaufrés, tridimensionnels, pour murs ou plafonds, en particulier papiers peints gauffrés

(30) Priorität: 24.07.1991 DE 4124533
(43) Veröffentlichungstag der Anmeldung: 27.01.1993
(73) Patentinhaber: Ditzel, Clemens, D-69245 Bammental (DE)
(72) Erfinder: Ditzel, Clemens, D-69245 Bammental (DE)
(74) Vertreter: Mierswa, Klaus, Dipl.-Ing.

(56) Entgegenhaltungen:
- EP-A- 0 034 791
- EP-A- 0 103 458
- EP-A- 0 390 409
- FR-A- 2 131 083
- RORORO-TECHNIKLEXIKON, Band 20, Bautechnik, Rowohlt Taschenbuch Verlag, Hamburg (DE), 1972; Seite 888

## Beschreibung

### Technisches Gebiet:

Die Erfindung betrifft eine dreidimensional geprägte Wand- oder Deckenbekleidung gemäß dem Oberbegriff des Anspruchs 1 und ein Verfahren zur Herstellung einer derartigen Wand- oder Deckenbekleidung gemäß Anspruch 6.

### Stand der Technik:

Um einer Papiertapete eine fühlbare Struktur auf ihrer Oberfläche zu geben, kann die Tapetenbahn insgesamt verprägt werden. Das Prägen erfolgt in der Form, daß das glatte Material einen Prägewalzensatz durchläuft, wobei die dreidimensionale Struktur der Prägewalzen das Tapetenpapier verformt. Üblicherweise besteht die Tapete aus einer Papierschicht.

Da die Tapete beim Tapezieren durch das Einkleistern mit stark wasserhaltigem Klebstoff jedoch stark durchnäßt wird, ist die Prägestruktur beim Tapezierprozeß druckempfindlich, weil das Wasser die Papierfasern anquellen läßt. Beim Trocknungsprozeß wird die Prägestruktur durch den Wasserentzug aus dem Kleberbett zwischen Tapete und Wand flachgezogen (an die Wand "gesaugt"). Dabei kommt es zu Verlusten der Prägehöhe von bis zu 80%. Um diese Verluste zu verringern, ist es bekannt, zwei Papierlagen kurz vor dem Prägeprozeß miteinander zu kaschieren. Dadurch kann die Stabilität der Prägestruktur in Grenzen erhöht sowie der Verlust an Prägehöhe durch den Abtrocknungsprozeß an der Wand verringert werden. Ein deutlich sichtbarer Verlust an Prägehöhe ist jedoch immer noch in Kauf zu nehmen. Die Klebstoffschicht, die die beiden Papierbahnen miteinander verbindet, kann die Tapete im tapeziernassen Zustand nur bedingt stabilisieren.

Weiterhin weisen diese sogenannten duplierten Prägetapeten, vor allem, wenn sie in besonders starkem Maße verprägt werden, zwangsläufig sogenannte Mikrorisse auf, die dadurch entstehen, daß die Papierschicht beim Prägevorgang entsprechend der Prägung feinst zerstört bzw. angerissen wird. Diese Mikrorisse im fertigen Material reduzieren die Festigkeit vor allem im tapeziernassen Zustand oftmals bis zur Unbrauchbarkeit der Tapete.

Geprägte Tapeten sind Gegenstand u.a. der DE 36 30 243 C2, DE 27 26 330 A1, EP 0 034 791 A1, EP 0 390 409 A1, EP 0 103 458 A1, DE-OS 16 35 595, DE-PS 525 141, US 2 014 460, US 3 738 905 sowie der DE 82 20 235 U1. Weiterhin ist für Tapetenrohpapiere der Entwurf DIN 6743 vom November 1990 einschlägig.

Durch die DE 86 00 174 U1 sowie die DE 86 13 624 U1 sind Prägetapeten bekannt geworden, bei denen das Tapetenrohpapier als Duplextapetenpapier (oder als Triplex-Papier) mehrlagig hergestellt ist. Dabei werden die einzelnen Lagen in der Gautschpresse vergautscht. Derartige Duplex- oder Triplex-Papiere können als Tapete bei einer Verprägung nicht ausreichend fixiert werden, weil beim Aufbringen der Tapete auf die Wand aufgrund der Feuchtigkeit die Prägung zurückgeht.

### Technische Aufgabe:

Der Erfindung liegt die Aufgabe zugrunde, ein Verfahren zur Herstellung einer dreidimensional geprägten Wand- oder Deckenbekleidung, insbesondere einer Prägetapete aus Papier, sowie eine derartige Wand- oder Deckenbekleidung zu schaffen, die beim Tapeziervorgang mit wasserhaltigen Klebern während des Antrocknens an der Wand oder Decke praktisch keinen Verlust ihrer Prägehöhe erleidet.

### Darstellung der Lösung und deren Vorteile:

Die Lösung besteht erfindungsgemäß darin, daß wenigstens drei Materialbahnen mit wenigstens zwei Klebeschichten miteinander verklebt sind, die Stützschichten bilden, daß die neutrale Zone ohne Biegebelastung der Wand- oder Deckenbekleidung durch die oder eine der mittleren Lagen der bahnförmigen Materialien verläuft, daß bezogen auf den Querschnitt derselben, mindestens eine der beiden äußeren Klebeschichten außerhalb der neutralen Zone ohne Biegebelastung liegt und daß die Klebeschichten im Verformungszustand aufgrund ihres Erhärtens bzw. Abbindens zu Stützschichten zu fixieren imstande sind.

Ein Verfahren zur Herstellung der erfindungsgemäßen Wand- oder Deckenbekleidung ist durch folgende Schritte gekennzeichnet: a) wenigstens drei Materialbahnen werden mit wenigstens zwei Klebeschichten miteinander verklebt, b) die neutrale Zone ohne Biegebelastung der Wand- oder Deckenbekleidung wird so gelegt, daß sie, bezogen auf den Querschnitt der Wand- oder Deckenbekleidung, durch die oder eine der mittleren Lagen der Materialbahnen verläuft, so daß mindestens eine der beiden äußeren Klebeschichten außerhalb der neutralen Zone ohne Biegebelastung zu liegen kommt, c) nach dem Verklebeprozeß, aber im noch nicht voll abgebundenen Zustand der Verklebungen bzw. des Klebers zwischen den einzelnen Materialbahnen wird die Wand- oder Deckenbekleidung mittels eines Prägewerkes oder Prägewalzen dreidimensional verformt, d) in diesem Verformungszustand werden die Klebeschichten aufgrund ihres Aushärtens bzw. Abbindens im innigen Kontakt mit den Fasern der angrenzenden Materialbahnen zu Stützschichten fixiert.

Weitere vorteilhafte Ausgestaltungen der Erfindung sind in den Unteransprüchen gekennzeichnet.

Die Wand- oder Deckenbekleidung besitzt den hervorstechenden Vorteil, daß diese beim Tapeziervorgang durch den Anwender mit wasserhaltigen Klebern während des Antrocknens an der Wand oder Decke praktisch keinen Verlust in der Prägehöhe erleidet, sondern nahezu die gesamte Prägehöhe erhalten bleibt. Das beruht auf der Distanzbildung zwischen oberster und unterster Klebeschicht, also durch die mindestens Dreilagigkeit der Wand- oder Deckenbekleidung, wodurch derselben in der Phase der Durchnässung beim Tapezieren und im nachfolgenden Trocknungsprozeß an der Wand oder Decke in z-Richtung, also in ihrer Dicke, ein ausreichende Stabilität und Steifigkeit verliehen werden kann, wodurch die Prägung praktisch voll oder nahezu voll erhalten bleibt. Die Wirkung der erfindungsgemäßen Wand- oder Deckenbekleidung kann mit einem Fachwerk mit Obergurt, Untergurt und Zugstäben verglichen werden.

Ein weiterer hervorstechender Vorteil besteht darin, daß die erfindungsgemäße Tapete auf ihre spätere Verwendung hin spezifisch ausgelegt werden kann, weil verschiedene Teilfunktionen der Wand- oder Deckenbekleidung bzw. der Tapete auf die verschiedenen Lagen verteilt werden können. Die Hauptfunktion einer Tapete ist die Dekoration einer Wand- oder Deckenfläche, die sich aus einer Reihe von Einzelfunktionen zusammensetzt:
- Oberfläche mit dekorativer farblicher Gestaltung und der dreidimensionalen Struktur
- Lichtechtheit der dekorativen farblichen Gestaltung
- Stabilität der dreidimensionalen Struktur
- Resistenz der Oberfläche gegenüber mechanischen Belastungen wie z.B. Reinigen mit Wasser oder Seife
- Ausreichende Festigkeit der Tapete für ein einwandfreies Tapezieren
- Ausreichende Materialfestigkeit für ein späteres Entfernen der gesamten alten Tapete zum Zeitpunkt einer Renovierung u.a.m.

Es ist möglich, den verschiedenen Lagen der Tapete voneinander getrennte, unterschiedliche Teilfunktionen zuzuteilen mit spezifischen Merkmalen, die bisher sehr aufwendig und insgesamt, wenn überhaupt möglich, von Ober-und Unterbahn der Prägetapete des Standes der Technik erfüllt werden mußten. Das Gesamtge-wicht der erfindungsgemäßen Tapete liegt niedriger, als bei bekannten Prägetapeten. Dadurch ist die erfindungsgemäße Tapete insgesamt nicht so steif und starr, wobei im Mikrobereich die Prägung in besonderer Weise stabilisiert wird.

Mit der erfindungsgemäßen Tapete können entsprechend der spezifischen Ausgestaltung eine Vielzahl von unterschiedlichen Produktvarianten hergestellt werden. Die Aufteilung der Hauptfunktion der erfindungsgemäßen Prägetapete auf mindestens drei Materialbahnen und wenigstens eine, vorzugsweise zwei Klebeschichten außerhalb der neutralen Zone ohne Biegebelastung führt zu einer Verringerung des Materialeinsatzes pro Teilfunktion, zu einer Zuordnung der speziellen Teilfunktion an den Ort innerhalb der Dicke der Tapete, der zur Erfüllung am geeignetsten ist, sowie zum Einsatz von physikalisch und optisch geringwertigerer Materialien in der Mittenbahn bzw. den Mittenbahnen, wodurch der Einsatz von Recyclingmaterialien möglich ist, da die innenliegenden Bahnen als Hauptfunktion die Erzeugung von Abstand für die Versteifung durch die klebenden Verbindungsschichten in Analogie zum Parallelfachwerk durch die Ausbildung von "Zugstäben" haben.

Durch den Einsatz von mehr als zwei Bahnen für die Wand- oder Deckenbekleidung bzw. die Tapete können erheblich dünnere Einzellagen verwendet werden, wodurch in vorteilhafter Weise die Mikrorissebildung während des Prägeprozesses verhindert wird, weil durch den noch nicht abgebundenen Klebstoff im Moment des Prägens die einzelnen Bahnen sich noch relativ zueinander bewegen können, so daß Belastungsspitzen in den Bahnen abgebaut werden.

### Kurzbeschreibung der Zeichnung:

- Figur 1: einen vergrößerten Querschnitt durch eine Prägetapete
- Figur 2: den Aufbau der Prägetapete in Analogie zu einem Parallelfachwerk
- Figur 3: einen Querschnitt durch die Prägetapete im Augenblick des Aufbringens während des Tapeziervorgangs auf die Wand oder Decke
- Figur 4: einen Querschnitt durch die Prägetapete der Figur 3 auf der Wand oder Decke nach dem Abtrocknen des Kleisters und
- Figur 5: ein Ausführungsbeispiel zum Herstellungsprozeß der Prägetapete.

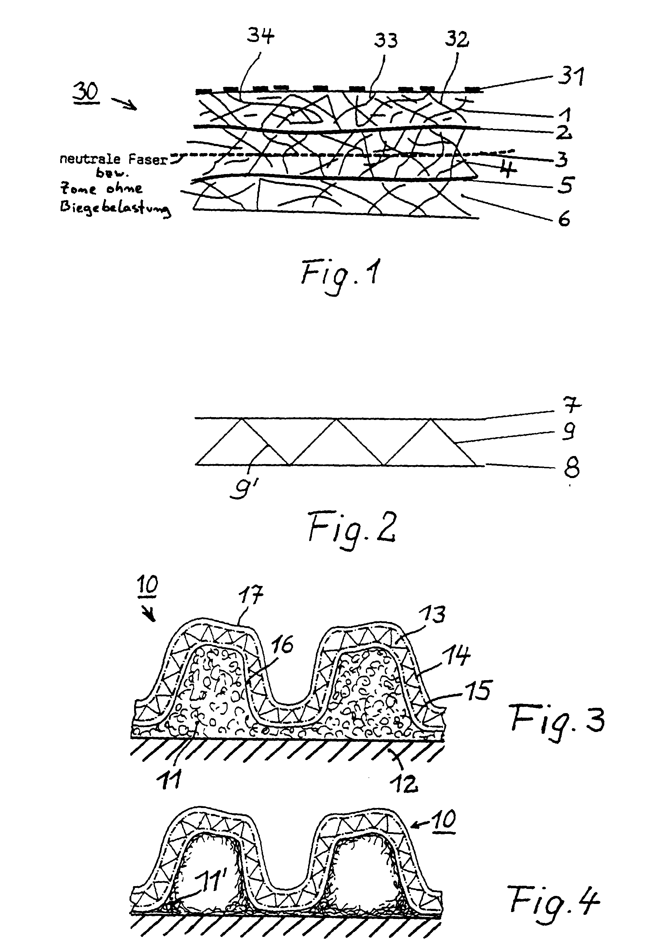

Figur 1 zeigt einen Querschnitt durch einen vergrößerten Teilausschnitt einer Prägetapete 30, bestehend aus einer Oberbahn 1, einer Mittenbahn 4 und einer Unterbahn 6, wobei sich zwischen der Oberbahn 1 und der Mittenbahn 4 eine Verbindungschicht 2 aus einem Klebstoff und zwischen der Mittenbahn 4 und der Unterbahn 6 ebenfalls eine Verbindungsschicht 5 aus Klebstoff befinden, womit die Bahnen zusammenkaschiert sind. Die gestrichelt gezeichnete neutrale Faser 3 bzw. neutrale Zone ohne Biegebelastung verläuft innerhalb der Mittenbahn 4 und somit zwischen den Verbindungsschichten 2 und 5. Falls mehrere Mittenbahnen vorhanden sind, verläuft die neutrale Zone entweder innerhalb einer der Mittenbahnen oder mindestens außerhalb einer der äusseren Verbindungsschichten, aber immer so, daß die neutrale Zone nicht innerhalb der Verbindungsschicht eines äußeren Stabilisierungs-Verbundes verläuft. Als äußerer Stabilisierungs-Verbund werden sowohl die Oberbahn mit Verbindungsschicht, als auch die Unterbahn mit derselben bezeichnet.

Auf der Oberbahn 1 kann sich des weiteren eine Farbschicht 31 als Dekor befinden. Die Tapete 30 ist dreidimensional in z-Richtung verprägt, wie es den Figuren 3 und 4 zu entnehmen ist. Die Bahnen 1, 4 und 6 können aus Fasern 32, 33, 34 hergestellt sein, die keine oder praktisch keine Vorzugsrichtung zueinander aufweisen; sie können auch eine Vorzugsrichtung zueinander aufweisen.

Der Aufbau der Tapete 30 kann am besten mit einem Parallelfachwerk gemäß der Figur 2 verglichen werden. Die Oberbahn und die Unterbahn werden durch einen Obergurt 7 bzw. Untergurt 8 gebildet, zwischen denen Zugstäbe 9, 9' ausgebildet sind, die der gemeinsamen Verbindung der Verbindungsschichten mit der Mittenbahn bzw. den Mittenbahnen analog sind. Auf diese Weise entsteht bei der Tapete 30 in Analogie zu einem Parallelfachwerk ein stabilisierter Verbund der inneren Versteifungsstruktur der Verbindungsschichten 2,5 mit der Mittenbahn 4 bzw. den Mittenbahnen, falls mehrere Mittenbahnen vorhanden sind, als auch der Verbindungsschichten 2,5 mit der Oberbahn und der Unterbahn.

Die Figuren 3 und 4 zeigen eine innerlich stabilisierte Prägetapete 10, die dreidimensional verprägt ist. Die Prägetapete 10 besteht aus einer Oberbahn 17 und einer Unterbahn 16, zwischen denen eine Mittenbahn 13 angeordnet ist, wobei die Bahnen mittels Verklebungsschichten 14, 15 miteinander kaschiert sind. Die beiden Verklebungsschichten 14, 15 bilden zusammen mit der Mittenbahn 13 wiederum die innere Stabilisierung in Form eines Stabilisierungs-Verbundes. Die Prägetapete 10 ist mittels nassem Kleister 11 auf eine Wand 12 aufgebracht. Nach dem Abtrocknen des Kleisters 11' entstehen innerhalb der "Prägeberge" der Prägetapete 10 Löcher, jedoch findet kein oder nur ein minimaler Schwund der Prägehöhe (z-Koordinate) der Prägetapete 10 statt.

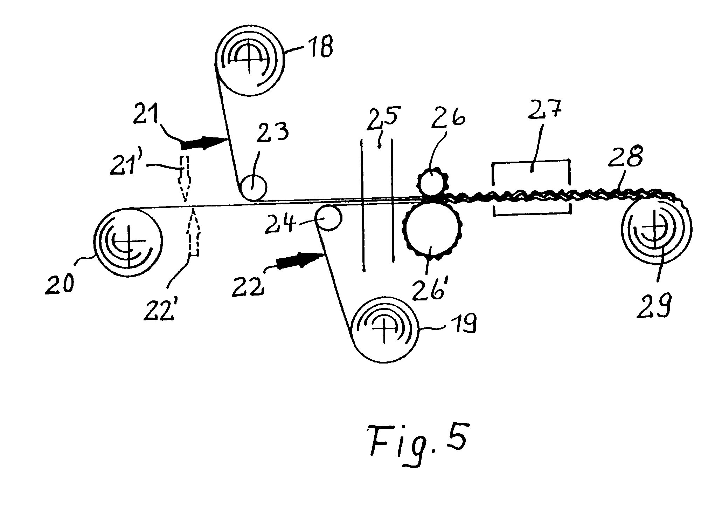

Figur 5 zeigt ein Ausführungsbeispiel zur Herstellung einer Prägetapete 28. Eine Oberbahn 18, eine Unterbahn 19 und eine Mittenbahn 20 werden von entsprechenden Wickeln abgewickelt, wobei innerhalb einer Klebstoff-Beschichtungs-Station 21 die Innenseite der Oberbahn 18 in geeigneter Weise mit Klebstoff beschichtet wird. Alternativ können zwei Klebstoff-Beschichtungs-Stationen 21', 22' beide Seiten der Mittenbahn beschichten; eine Klebstoff-Beschichtungs-Station 22 beschichtet die Innenseite der Unterbahn 19. Die Bahnen werden in geeigneter Weise in Kaschierstationen 23, 24 aufeinander kaschiert und durchlaufen eine nachfolgende Speicherstrecke 25, innerhalb derselben ein Verweilen zum Durchweichen der Bahnen erfolgt. Nach der Speicherstrecke 25 ist ein Prägewalzenpaar 26, 26' angeordnet, innerhalb derselben die aufeinanderkaschierten Bahnen 18, 19, 20 dreidimensional, und somit in z-Richtung, verformt werden. Dabei ist der aufgebrachte Klebstoff noch plastisch verformbar.

Wenn die Klebebeschichtung Wasser enthält, durchläuft der jetzt geprägte, meist feuchte, Verbund einen Trockner 27, der das Wasser aus dem Verbund heraus trocknet und die Klebeschichten versteift und damit die stabilisierende und stabilisierte Verbindung zwischen den Lagen herstellt. Damit ist die Prägetapete 28 fertiggestellt und kann anschließend auf einer Aufwickelstation 29 aufgewickelt werden. Die Mittelbahn 20 kann aus mehreren Einzellagen zusammenkaschiert sein. Vorteilhaft wird zur Verklebung der Bahnen ein wasserhaltiger Klebstoff benützt, der nach dem Trocknen praktisch wasserunlöslich ist. Dadurch bleibt beim Aufbringen der Prägetapete auf die Wand oder Decke der Stabilisierungs-Verbund und somit die Prägestruktur der Prägetapete in nahezu voller Prägehöhe erhalten.

Nachfolgend ist eine Aufteilung der Teilfunktionen der Prägetapete auf die einzelnen Schichten derselben in Form einer Tabelle aufgelistet.

### Aufteilung der Teilfunktionen auf die einzelnen Schichten der Prägetapete:

| Teilfunktion: | | | | | |
|---|---|---|---|---|---|
| | Oberbahn | oberste Klebschicht | Mittenbahn(en) | unterste Klebsch. | Unterbahn |
| 1. Dekorative Eigenschaften der Tapete | | | | | |
| 1.1. Helligkeit | * | | | | |
| 1.2. Bedruckbarkeit | * | | | | |
| 1.3. Prägestruktur | o | * | * | * | o |
| 2. Mechanische Eigenschaften | | | | | |
| 2.1. Waschbarkeit der Oberfläche | * | | | | |
| 2.2. Dehnbarkeit der Dekorschicht | * | | | | |
| 2.3. Dehnbarkeit für Verprägung | * | o | o | o | * |
| 2.4. Lichtechtheit | * | | | | |
| 2.5. Festigkeit für ein restloses trockenes Abziehen der Tapete von der Wand beim Tapetenwechsel | | o | o | * | * |
| 3. Minimierung des Gesamtgewichts | * | | o | | * |
| 4. Stabilität beim Tapezieren | o | * | * | * | o |
| 5. Stabilität gegen Prägeschwund beim Trocknen nach Tapezieren | o | * | * | * | o |
| 6. Schnelles Durchweichen beim Tapezieren | | * | * | * | o |
| 7. Einsatz von Recyclingpapieren mit geringeren mechan. und schlechteren optischen Eigenschaften | | * | | o | |
| Erklärung der Zuordnung: * = besonders vorteilhafter Ort o = möglicher Ort | | | | | |

### Gewerbliche Anwendbarkeit:

Die Erfindung eignet sich insbesondere zur Schaffung und zur Verfügungstellung von Prägetapeten für die Wand- und Deckenbekleidung, die beim anschließenden Tapeziervorgang mit einem wasserhaltigen Kleber keine Einbussen ihrer Prägung hinsichtlich Höhe, Ausgeprägtheit und Struktur erleiden.

### Liste der Bezugszeichen:

- 1: Oberbahn
- 2: klebende Verbindungsschicht
- 3: neutrale Faser bzw. Zone
- 4: Mittenbahn(en)
- 5: klebende Verbindungsschicht
- 6: Unterbahn
- 7: Obergurt
- 8: Untergurt
- 9, 9': Zugstäbe
- 10: Prägetapete
- 11, 11': Kleister
- 12: Wand oder Decke
- 13, 20: Mittenbahn(en)
- 14, 15: Verklebungsschichten
- 16, 19: Unterbahn
- 17, 18: Oberbahn
- 23, 24: Kaschierstationen
- 21, 21', 22, 22',: Klebstoff-Beschichtungsstationen
- 25: Speicherstrecke
- 26, 26': Prägewalzenpaar
- 27: Trockner
- 28, 30: Prägetapeten
- 29: Aufwickelstation
- 31: Farbschicht als Dekor
- 32, 33, 34: Fasern

## Patentansprüche

1. Dreidimensional geprägte mehrlagige Wand- oder Deckenbekleidung (10,28,30) zum Tapezieren mit einem wasserhaltigen Klebstoff auf der Wand oder Decke aus bahnförmigen Materialien (1,4,6;13,16,17;18,19,20), die mittels einer eine Stützschicht bildende Klebeschicht (2,5;14,15) miteinander verklebt sind, wobei, nach dem Verklebeprozeß, aber im noch nicht abgebundenen Zustand der Verklebungen (2,5;14,15) die dreidimensionale Verformung der Wand- oder Deckenbekleidung (10,28,30) mittels eines Prägewerkes oder Prägewalzen (26,26') eingebracht ist insbesondere Prägetapete (10,28,30) aus Papier,
dadurch gekennzeichnet,
daß wenigstens drei Materialbahnen (1,4,6;13,16,17;18,19,20) mit wenigstens zwei Klebeschichten (2,5;14,15) miteinander verklebt sind, die Stützschichten bilden, daß die neutrale Zone (3) ohne Biegebelastung der Wand- oder Deckenbekleidung (10,28,30) durch die oder eine der mittleren Lagen (4,13,20) der bahnförmigen Materialien (1,4,6;13,16,17; 18,19,20) verläuft, daß bezogen auf den Querschnitt derselben, mindestens eine der beiden äußeren Klebeschichten (2,5;14,15) außerhalb der neutralen Zone (3) ohne Biegebelastung liegt und daß die Klebeschichten (2,5;14,15) im Verformungszustand aufgrund ihres Erhärtens bzw. Abbindens zu Stützschichten zu fixieren imstande sind.

2. Wand- oder Deckenbekleidung nach Anspruch 1, dadurch gekennzeichnet, daß dieselbe aus drei Lagen bahnförmiger Materialien (1,4,6;13,16,17;18,19,20) besteht und die neutrale Zone (3) ohne Biegebelastung der Wand- oder Deckenbekleidung (10,28,30) innerhalb der mittleren Materiallage (4,13,20) außerhalb der klebenden Stützschichten (2,5;14,15) verläuft.

3. Wand- oder Deckenbekleidung nach Anspruch 1, dadurch gekennzeichnet, daß dieselbe aus drei Lagen bahnförmiger Materialien (1,4,6;13,16,17;18,19,20) besteht und die neutrale Zone (3) ohne Biegebelastung der Wand- oder Deckenbekleidung (10,28,30) innerhalb der mittleren Materiallage (4,13,20) außerhalb der klebenden Stützschichten (2,5;14,15) verläuft.

4. Wand- oder Deckenbekleidung nach Anspruch 1 oder 2,
dadurch gekennzeichnet,
daß dieselbe eine Papiertapete mit mindestens drei aufeinander kaschierten Bahnen ist, wobei die mittlere (4,13,20) und gegebenenfalls die untere (6,16,19) Bahn (1,4,6;13,16,17;18,19,20) aus optisch und mechanisch geringwertigeren Materialien als die Deckbahn (1,17,18) besteht.

5. Wand- oder Deckenbekleidung nach einem der vorherigen Ansprüche,
dadurch gekennzeichnet,
daß die Klebschichten (2,5;14,15) nur punktuell oder feinteilig-unterbrochen zwischen den einzelnen Bahnen angeordnet sind.

6. Verfahren zum Herstellen einer dreidimensional geprägten mehrlagigen Wand- oder Deckenbekleidung (10,28,30) nach mindestens einem der Ansprüche 1 bis 5
gekennzeichnet durch folgende Schritte :
a) wenigstens drei Materialbahnen (1,4,6;13,16,17;18,19,20) werden mit wenigstens zwei Klebeschichten (2,5;14,15) miteinander verklebt,
b) die neutrale Zone (3) ohne Biegebelastung der Wand- oder Deckenbekleidung (10,28,30) wird so gelegt, daß sie, bezogen auf den Querschnitt der Wand- oder Deckenbekleidung (10,28,30), durch die oder eine der mittleren Lagen (4,13,20) der Materialbahnen (1,4,6;13,16,17;18,19,20) verläuft, so daß mindestens eine der beiden äußeren Klebeschichten (2,5;14,15) außerhalb der neutralen Zone (3) ohne Biegebelastung zu liegen kommt,
c) nach dem Verklebeprozeß, aber im noch nicht voll abgebundenen Zustand der Verklebungen (2,5;14,15) bzw. des Klebers zwischen den einzelnen Materialbahnen (1,4,6;13,16,17;18,19,20) wird die Wand- oder Deckenbekleidung (10,28,30) mittels eines Prägewerkes oder Prägewalzen (26,26') dreidimensional verformt
d) in diesem Verformungszustand werden die Klebeschichten (2,5;14,15) aufgrund ihres Aushärtens bzw. Abbindens im innigen Kontakt mit den Fasern der angrenzenden Materialbahnen (1,4,6;13,16,17;18,19,20) zu Stützschichten fixiert.

7. Verfahren nach Anspruch 6, dadurch gekennzeichnet,
daß die Klebschichten (2,5;14,15) nur punktuell oder feinteilig-unterbrochen zwischen den einzelnen Bahnen angeordnet werden.

## Claims

1. Three-dimensional, embossed, multi-layered wall or ceiling covering (10, 28, 30) for wallpapering on the wall or ceiling with a hydrous adhesive and made of sheet-like materials (1, 4, 6; 13, 16, 17; 18, 19, 20) which are glued together by means of an adhesive layer (2, 5; 14, 15) that forms a support layer, whereby, after the adhesion process but still before the adhesions (2, 5; 14, 15) are completely set, the three-dimensional shaping of the wall or ceiling covering (10, 28, 30) is applied by using an embossing means or embossing rollers (26, 26'), especially embossed wall covering (10, 28, 30) made of paper,
characterized in that
at least three sheets of material (1, 4, 6; 13, 16, 17; 18, 19, 20) are glued together with at least two adhesive layers (2, 5; 14, 15), which form support layers, in that the neutral zone (3) of the wall or ceiling covering (10, 28, 30) without bending load runs through the middle layer or one of the middle layers (4, 13, 20) of the sheet-like materials (1, 4, 6; 13, 16, 17; 18, 19, 20), in that, relative to the cross section thereof, at least one of the two outer adhesive layers (2, 5; 14, 15) lies outside of the neutral zone (3) without bending load, and in that the adhesive layers (2, 5; 14, 15) in the shaped state, as a result of their setting or hardening, are capable of fixation onto support layers.

2. Wall or ceiling covering according to Claim 1,
characterized in that
said covering consists of three layers of sheet-like materials (1, 4, 6; 13, 16, 17; 18, 19, 20) and the neutral zone (3) of the wall or ceiling covering (10, 28, 30) without bending load runs within the middle layer of material (4, 13, 20) outside of the adhesive support layers (2, 5; 14, 15).

3. Wall or ceiling covering according to Claim 1,
characterized in that
said covering consists of three layers of sheet-like materials (1, 4, 6; 13, 16, 17; 18, 19, 20) and the neutral zone (3) of the wall or ceiling covering (10, 28, 30) without bending load runs within the middle layer of material (4, 13, 20) outside of the adhesive support layers (2, 5; 14, 15).

4. Wall or ceiling covering according to Claim 1 or 2,
characterized in that
said covering is a paper wallpaper with at least three sheets laminated onto each other, whereby the middle (4, 13, 20) and optionally the bottom (6, 16, 19) sheet (1, 4, 6; 13, 16, 17; 18, 19, 20) consist of materials that are optically and mechanically inferior to the top sheet (1, 17, 18).

5. Wall or ceiling covering according to one of the preceding Claims,
characterized in that
the adhesive layers (2, 5; 14, 15) are applied only punctually or finely interrupted between the individual sheets.

6. Process for the production of a three-dimensionally embossed multi-layered wall or ceiling covering (10, 28, 30) according to at least one of Claims 1 through 5,
characterized by the following steps:
a) at least three sheets of material (1, 4, 6; 13, 16, 17; 18, 19, 20) are glued together with at least two adhesive layers (2, 5; 14, 15),
b) the neutral zone (3) of the wall or ceiling covering (10, 28, 30) without bending load is positioned in such a way that, relative to the cross section of the wall or ceiling covering (10, 28, 30), it runs through the middle layer or one of the middle layers (4, 13, 20) of the sheet-like materials (1, 4, 6; 13, 16, 17; 18, 19, 20), so that at least one of the two outer adhesive layers (2, 5; 14, 15) ends up outside of the neutral zone (3) without bending load,
c) after the adhesion process, but still before the adhesions (2, 5; 14, 15) or the adhesive between the individual sheets of material (1, 4, 6; 13, 16, 17; 18, 19, 20) are completely set, the wall or ceiling covering (10, 28, 30) is shaped three-dimensionally by using an embossing means or embossing rollers (26, 26'),
d) in this shaped state, due to their hardening or setting, the adhesive layers (2, 5; 14, 15) are fixed in close contact with the fibers of the adjacent sheets of material (1, 4, 6; 13, 16, 17; 18, 19, 20) to form support layers.

7. Process according to Claim 6, characterized in that,
the adhesive layers (2, 5; 14, 15) are applied only punctually or finely interrupted between the individual sheets.

## Revendications

1. Revêtement mural ou de plafond (10,28,30) gaufré, tridimensionnel et en plusieurs couches pour tapissage sur mur ou plafond avec une colle à base d'eau, consistant en matériaux sous forme de lés (1,4,6;13,16,17;18,19,20), rendus solidaires entre eux par collage au moyen d'une couche adhésive (2,5;14,15) constituant une couche de stabilisation, la déformation tridimensionnelle du revêtement mural ou de plafond (10,28,30) se faisant au moyen d'un dispositif de gaufrage ou de rouleaux de gaufrage (26,26') après achèvement du processus d'encollage, mais avant que les colles (2,5;14,15) n'aient atteint l'état où elles sont prises, revêtement mural ou de plafond, notamment tapisserie gaufrée (10,28,30) en papier,
caractérisé en ce que
au moins trois lés de matériau (1,4,6;13,16,17;18,19,20) sont rendus solidaires entre eux par collage par au moins deux couches de colle (2,5;14,15) qui constituent des couches de stabilisation, en ce que la zone neutre (3) exempte de contrainte de cintrage du revêtement mural ou de plafond (10,28,30) parcourt la ou l'une des couches du milieu (4,13,20), en ce que, rapporté à la section desdits matériaux en forme de lés, au moins une des deux couches adhésives extérieures (2,5;14,15) se trouve en dehors de la zone neutre (3) exempte de contrainte de cintrage, et en ce que les couches adhésives (2,5;14,15), lorsqu'elles sont déformées sont capables de constituer par leur durcissement, en l'occurence par la prise de la colle, des couches de stabilisation.

2. Revêtement mural ou de plafond selon la revendication 1,
caractérisé en ce que
ledit revêtement consiste en trois couches de matériaux en forme de lés (1,4,6;13,16,17;18,19,20) et que la zone neutre (3) sans contrainte de cintrage du revêtement mural ou de plafond (10,28,30) parcourt la couche de matériau du milieu (4,13,20) hors des couches adhésives de stabilisation (2,5;14,15).

3. Revêtement mural ou de plafond selon la revendication 1,
caractérisé en ce que ledit revêtement consiste en trois couches de matériaux en forme de lés (1,4,6;13,16,17;18,19,20) et que la zone neutre (3) sans contrainte de cintrage du revêtement mural ou de plafond (10,28,30) parcourt la couche de matériau du milieu (4,13,20) hors des couches adhésives de stabilisation (2,5;14,15).

4. Revêtement mural ou de plafond selon la revendication 1 ou 2,
caractérisé en ce que
ledit revêtement est un papier peint consistant en au moins trois lés contrecollés, le lé du milieu (4,13,20) et le cas échéant le lé (1,4,6;13,16,17;18,19,20) du dessous (6,16,19) consistant en matériaux dont les propriétés optiques et mécaniques sont d'une qualité inférieure à celle du lé supérieur (1,17,18).

5. Revêtement mural ou de plafond selon l'une des revendications ci-avant,
caractérisé en ce que
les couches adhésives (2,5;14,15) sont appliquées entre les différentes couches de façon ponctuelle ou intermittente à de très petits intervalles.

6. Procédé pour la fabrication d'un revêtement mural ou de plafond (10,28,30) gaufré tridimensionnel et en plusieurs couches selon au moins l'une des revendications ci-avant,
caractérisé par les étapes suivantes:
a) au moins trois lés de matériau (1,4,6;13,16,17;18,19,20) sont rendus solidaires par collage par au moins deux couches de colle (2,5;14,15),
b) la zone neutre (3) sans contrainte de cintrage du revêtement mural ou de plafond (10,28,30) est placée de sorte que, rapporté à la section du revêtement mural ou de plafond (10,28,30), elle parcourt la ou l'une des couches du milieu (4,13,20) des lés de matériau (1,4,6;13,16,17;18,19,20) de sorte que au moins l'une des deux couches adhésives extérieures (2,5;14,15) vienne à se situer en dehors de la zone neutre (3) sans contrainte de cintrage,
c) après le processus d'encollage, mais tant que les colles (2,5;14,15) n'ont pas encore entièrement pris entre les différents lés de matériau (1,4,6;13,16, 17;18,19,20) le revêtement mural ou de plafond (10,28,30) est déformé en tridimensionnel au moyen d'un dispositif de gaufrage ou de rouleaux de gaufrage (26,26'),
d) dans cet état de déformation, les couches adhésives (2,5;14,15) entrent, en raison de leur durcissement, en l'occurence de la prise de la colle, en contact étroit avec les fibres des lés de matériaux attenants (1,4,6;13,16,17;18,18,20) et constituent des couches de stabilisation.

7. Procédé selon la revendication 6,
caractérisé en ce que
les couches adhésives (2,5;14,15) ne sont appliquées que de façon ponctuelle ou intermittente à de très petits intervalles entre chacun des lés.
